# EUROPEAN PATENT SPECIFICATION

(11) **EP 3 404 461 B1**
(45) Date of publication and mention of the grant of the patent: **29.06.2022**
(21) Application number: 17171377.9
(22) Date of filing: 16.05.2017
(51) Int. Cl.: G02B 6/44

(54) **CABLE MANAGEMENT DEVICE**
KABELVERWALTUNGSVORRICHTUNG
DISPOSITIF DE GESTION DE CÂBLES

(43) Date of publication of application: 21.11.2018
(73) Proprietor: Reichle & De-Massari AG, 8620 Wetzikon (CH)
(72) Inventor: DEMBEK, Andreas, 8505 Dettighofen (CH); STEFANOV, Spas, 1336 Sofia (BG); ZHELYAZKOV, Evgeni, 8002 Burgas (BG); ATANASOV, Stoyan, 1220 Sofia (BG)
(74) Representative: Daub, Thomas

(56) References cited:
- WO-A1-2016/156611
- WO-A1-2016/168337
- US-A- 5 778 131
- US-A1- 2010 290 751
- US-A1- 2014 248 028
- US-A1- 2015 331 215
- US-A1- 2017 082 815

## Description

### State of the art

The invention concerns a cable management device according to the preamble of claim 1. From the state of the art cable management devices for optical waveguide cables are known, which comprise a cable management unit embodied as a 19-inch insert for connecting to a 19 inch standard rack, wherein the cable management unit comprises at least one cable management module which is movable from a storage position to a processing position and vice versa.

The objective of the invention is in particular to make a generic cable management device available that has improved characteristics regarding flexibility. The objective is achieved by the characterizing features of claim 1 while advantageous implementations and further developments of the invention may be gathered from the dependent claims. US 2017/082815 A1 discloses a cable management device according to the preamble of claim 1.

### Advantages of the invention

In one aspect of the invention, a cable management device, in particular for optical waveguide cables, according to claim 1 is proposed.

A "cable management device" is to be understood, in this context, in particular at least as a portion, in particular a sub-assembly, of a cable management system, preferably for use in a fiber optic network, in particular a data center. In particular, the cable management device is configured for terminating at least one cable and preferably a plurality of cables and/or for supporting an interconnection between a plurality of cables. Herein, the cable management device is preferably embodied as an optical distribution frame. Moreover, the cable management system and/or the cable management device may in particular also comprise at least one cable, preferably optical waveguide cable, and/or at least one carrier unit, which may preferably be embodied as a rack and which is in particular configured for fastening the cable management unit at least indirectly and/or directly. "Configured" is in particular to mean specifically designed and/or equipped. By an object being configured for a certain function, it is in particular to be understood that the object fulfills and/or implements this certain function in at least one application state and/or operating state.

Moreover, a "cable management unit" is in particular to be understood as a unit which is in particular, in at least one operational state, configured for managing, in particular guiding, connecting, coupling, terminating and/or distributing, cables, in particular a plurality of cables, preferably optical waveguide cables. In particular, the cable management unit herein comprises at least one frame unit, in particular a chassis and/or an exterior housing, which can preferably be fastened to the carrier unit and which is configured to at least partly and preferably at least largely delimit at least one receiving region for receiving the cable management module and preferably a plurality of cable management modules, in particular at least two, preferably at least three and most preferably at least four cable management modules. Moreover, the cable management unit could be embodied, for example, as an ETSI insert in particular with a standard width of 535 mm, as a 584,2-mm (23-inch) insert and/or as any other insert, in particular for connecting to an, in particular standard, ETSI rack, 584,2-mm (23-inch) rack and/or any other rack. It is, however, advantageously proposed that the cable management unit is embodied as a 482,6-mm (19-inch) insert, in particular for connecting to an, in particular standard, 482,6-mm (19-inch) rack. In this case, a total width of the cable management unit is between 445 mm and 730 mm. In addition, preferably a width of the cable management unit from a first side wall of the frame unit to a second side wall of the frame unit is 448.2 mm. Furthermore, the cable management unit could, in particular, have a height between 1 height unit and 4 height units. However, preferably the cable management unit has a height of 3 height units. Advantageously, the cable management device comprises a plurality, preferably at least four, particularly preferably at least eight and most preferably at least fourteen, cable management units which are preferably releasable from, connectable to and/or replaceable by each other individually and which are embodied particularly preferably at least substantially identical to each other. Herein, the cable management units are preferably located adjacent to each other and particularly preferably one above the other, in particular with respect to a height of the cable management unit. The phrasing "at least substantially identical objects" is in particular to mean, in this context, objects which advantageously have the same structure but may at least partially differ in particular as regards their functionality, their inner structure, and/or their dimensions. However, preferably the at least substantially identical objects are identical aside from manufacturing tolerances and/or within the range of standardized tolerances. One "height unit" herein corresponds in particular to one rack unit (U) i.e. 44.45 mm. The term "at least largely" is herein to mean, in particular, by at least 55 %, advantageously by at least 65 %, preferably by at least 75 %, particularly preferentially by at least 85 % and especially advantageously by at least 95 %.

Furthermore, a "cable management module" is in particular to be understood as an, in particular movably mounted, unit, in particular a drawer unit, which is in a mounted state in particular located in the receiving region and which is preferably configured for providing and/or supporting a connection functionality and/or a connection capability. Herein, the cable management module is preferably configured for guiding, connecting, coupling, terminating and/or distributing at least one cable. Advantageously, the cable management module extends at least largely over an entire width of the cable management unit. In addition, the cable management module could in particular have a height between 10 % and 80 %, preferably between 15 % and 60 % and particularly preferably between 20 % and 40 %, of a height of the cable management unit. However, preferably the cable management module has a height of 25 % of a height of the cable management unit. Particularly preferably, the cable management unit comprises a plurality, preferably at least two, particularly preferably at least three and most preferably at least four, cable management modules which are preferably releasable from, connectable to and/or replaceable by each other individually and which are particularly preferably embodied at least substantially identical to each other. In addition, the cable management modules are preferably located adjacent to each other and particularly preferably one above the other, in particular with respect to the height of the cable management unit. By the expression "having a modular structure" is herein to be understood, in particular, that the cable management module itself and/or at least one structural component of the cable management module has a modular structure and/or is implemented in such a way that it can be assembled modularly, for example like in a construction kit. In particular, herein at least one structural component of the cable management module can be replaced by at least one further structural component. Particularly preferably, the cable management module is herein extendable and/or reducible in any required way.

Furthermore, by a "storage position" is to be understood, in particular, an in particular mechanically defined position of the cable management module, in which a normal operation takes place and/or in which a processing, e.g. a maintenance, a new cabling, a patching and/or a splicing, is severely limited. In particular, in the storage position the cable management module is at least largely and preferably completely located in the receiving region of the cable management unit and/or at least largely and preferably completely inserted into the cable management unit. By a "processing position" is to be understood, in particular, an in particular mechanically defined position of the cable management module, in which a processing operation, e.g. a maintenance operation, a cabling operation a patching operation and/or a splicing operation, is possible. In particular, in the processing position the cable management module is only partly located in the receiving region of the cable management unit and/or only partly inserted into the cable management unit.

Moreover, by a "fiber connection density" is to be understood, in particular, a number of fiber connections per definable and/or defined volume, in particular per height unit, which fiber connections are supported by the cable management unit and in particular by the cable management module and/or the cable management modules. Herein, a height unit in particular corresponds to a height of the cable management unit, in particular measured in height units. In the present case, a fiber connection density of more than 96 fiber connections, preferably more than 108 fiber connections and particularly preferably more than 120 per height unit is, in particular, obtained by a special implementation of the cable management module, in particular a modular character, an accessibility and/or a movability of the cable management module.

As already mentioned, the cable management unit could be embodied, for example, as an ETSI insert, as a 584,2-mm (23-inch) insert and/or as any other suitable insert. However, it is proposed that the cable management unit is advantageously embodied as a 19-inch insert and is configured to support at least 124 fiber connections, preferably at least 126 fiber connections and particularly preferably at least 128 fiber connections, per height unit. Thus, in case the cable management unit has a height of 3 height units, it is configured to support at least 372 fiber connections, preferably at least 378 fiber connections and particularly preferably at least 384 fiber connections. In this way in particular a cable management device with an improved flexibility may be achieved wherein the cable management device may in particular be individually adapted to different needs of users.

A "movement compensation channel" is in particular to be understood as an, in particular channel-shaped, unit which, in particular, at least partly defines and/or determines a course and/or a pathway of at least one cable conveyed to the cable management module and/or from the cable management module and which is preferably configured to maintain a length of the cable, in particular at least within the cable management module, and/or a maximum bending radius of the cable. Herein, the movement compensation channel is preferably embodied separately from the cable management module and movably connected to the cable management module, in a mounted state. Preferably, the movement compensation channel is at least partly movable independently from the cable management module and/or non-uniformly with respect to the cable management module. Particularly preferably, the movement compensation channel is at least partly movable in a movement direction which differs from a movement direction of the cable management module. Furthermore, the movement compensation channel is advantageously open in a direction parallel to the height of the cable management unit, in particular for facilitating an introduction of the cable. The movement compensation channel may in particular be embodied as and/or may in particular comprise a flexible tube for conveying the cable.

Furthermore, it is proposed that the movement compensation channel is located at least largely and preferably completely within the frame unit and in particular within the cable management module. Advantageously, the movement compensation channel is, herein, located at least partly and preferably at least largely below the cable inlay receiving region of the cable management module. As a result of this, in particular, a construction space efficiency can be improved.

Advantageously, the movement compensation channel extends at least largely over an entire width of the cable management module and preferably of the cable management unit. This allows achieving in particular an especially efficient, flexible and/or clean cable guidance.

It is further proposed that the movement compensation channel is pivotable about at least one vertically aligned pivot axis, in particular with respect to the frame unit. In this case, the movement compensation channel preferably comprises at least one rigid component. As a result of this, in particular, a construction space efficiency can be improved. Moreover, in particular a movement of and/or a tensile stress on the cable can be avoided, advantageously.

Furthermore, it is proposed that the cable management unit comprises at least one cable entry which is configured for introducing the cable, preferably a plurality of cables, in particular into an interior of the cable management unit, in particular into the cable management module, and which is stationary, in particular with respect to the frame unit, in at least one operational state in which the cable management module is moved, in particular at least from the storage position to the first processing position and vice versa, wherein the cable entry is connected to the cable management module via the movement compensation channel, in particular indirectly or preferably directly. Advantageously, the cable entry is located at an, in particular lateral, side wall of the frame unit which is arranged, in particular, perpendicularly to a front side of the frame unit and/or of the cable management module. In addition, the movement compensation channel can in particular be connected to the cable entry and/or the cable management module via a rigid connection, e.g. using a hinge, and/or via a flexible connection, e.g. by a flexible connection part of the cable entry, the movement compensation channel and/or the cable management module. Particularly preferably, the cable entry is stationary, in particular with respect to the frame unit, during a movement of the cable management module to the first processing position and moves, in particular in a direction which is parallel to a movement direction of the cable management module, and in particular with respect to the frame unit, during a movement of the cable management module to the second processing position. In this way, in particular, a particularly clean cable guidance as well as an advantageously processing operation may be achieved.

Preferably, the movement compensation channel comprises at least one circumferentially closed channel for securely guiding the cable from the cable entry to the cable management module, in particular to a cable storage portion of the cable management module. Most preferably the movement compensation channel comprises a plurality of circumferentially closed channels, each of which being configured for securely guiding at least one cable from the cable entry to the cable management module. Thereby, installation reliability can be improved.

Preferably, it is proposed that the cable routing manager comprises a plurality of cable routing manager elements, in particular at least two and/or at least three cable routing manager elements, which are movably connected to each other. As a result, in particular a flexibility of the cable management device can be further improved. In addition, a cable length can be advantageously maintained such that stresses on the cable can be prevented.

In a further implementation of the invention it is proposed that the cable routing manager elements are pivotable with respect to each other about at least one vertically aligned further pivot axis, in particular with respect to the frame unit. Particularly preferably, the further pivot axis and the pivot axis, in particular the pivot axis about which the movement compensation channel is pivotable, are offset in a horizontal direction with respect to each other, in particular with respect to the width of the cable management unit. As a result, an advantageously modular structure may be achieved. Moreover, in particular a flexible movement compensation of the cables connected to the cable entry may be achieved.

Furthermore, it is proposed that the front-side cable manager comprises a locking unit which is configured to lock the cable management module at least in the storage position and/or the processing position, in particular the first processing position and/or the second processing position. Preferably, the locking unit comprises at least one actuating element and at least one locking element, which is in operative connection with the actuating element and which is in at least one operational state connected and/or secured to the frame unit for locking the cable management module. Moreover, the locking element is preferably pivotable about at least one vertically aligned additional pivot axis for locking and/or unlocking the cable management module. In this way, in particular a fast and simple locking and/or unlocking mechanism can be provided.

Advantageously, it is further proposed that the front-side cable manager comprises a cable divider element defining at least two cable guiding channels which are at least partly separate from each other and which are configured for selectively guiding the cable. Preferably, each of the cable guiding channels is configured to guide a plurality of cables. Thus, the cable divider element is preferably configured for dividing a plurality of cables into at least two at least partly separate groups of cables. Advantageously, the cable divider element is embodied separately from the cable manager element and is more advantageously couplable to the cable manager element, in at least one operational state and/or depending on user requirements. As a result, in particular, a cable management and/or a cable routing may be improved further.

### Drawings

Further advantages may be gathered from the following description of the drawings. In the drawings one exemplary embodiment of the invention is shown. The drawings, the description and the claims contain a plurality of features in combination. A person having ordinary skill in the art will purposefully also consider the features separately and will find further expedient combinations.

It is shown in:
- Fig. 1: a schematic view of an exemplary cable management system with a cable management device having a plurality of cable management units and a plurality of fiber distribution units,
- Fig. 2a-c: a perspective view of a portion of a cable management unit and a fastening element for fastening the cable management unit,
- Fig. 3a-c: a movable cable management module of the cable management unit in different positions,
- Fig. 4a-b: a selectively usable first functionality of a cable management module of the cable management unit, in a perspective view,
- Fig. 5a-b: a selectively usable second functionality of a cable management module of the cable management unit, in a perspective view,
- Fig. 6a-b: a selectively usable third functionality of a cable management module of the cable management unit, in a perspective view,
- Fig. 7a-b: a cable management module of the cable management unit, in two different positions, in a top view,
- Fig. 8a-c: a selectively usable cable routing manager of the cable management unit, in perspective views,
- Fig. 9a-c: a cable manager element of a front-side cable manager of the cable management unit, in perspective views,
- Fig. 10a-b: a cable divider element of the front-side cable manager, in perspective views,
- Fig. 11a-b: perspective views of a fiber distribution unit, and
- Fig. 12a-b: a front cover holding unit of the cable management module for holding and locking a front cover of the cable management module.

### Description of the exemplary embodiment

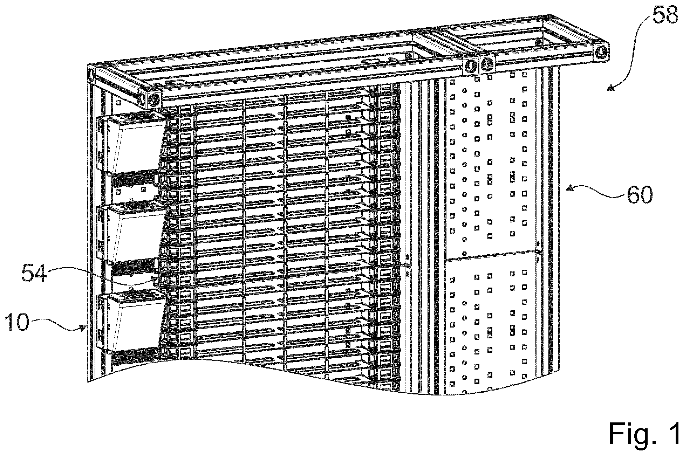

Figure 1 schematically shows a cable management system 58 with a cable management device. The cable management device is embodied as an optical distribution frame. The cable management device is configured for managing cables, which are preferably embodied as optical waveguide cables. However, it is also conceivable to use cables that differ from optical waveguide cables, e.g. electric cables.

The cable management device comprises at least one cable management unit 10. In the present case, the cable management device comprises a plurality of cable management units 10, in particular fourteen cable management units 10, wherein for the sake of clarity in figure 1 merely one of the cable management units 10 comprises a reference numeral. The cable management units 10 are located adjacent to each other and in particular one above the other. The cable management units 10 are at least substantially identical to each other. Moreover, the cable management units 10 are releasable from, connectable to and/or replaceable by each other individually.

The following description will be restricted to one of the cable management units 10, wherein, due to the at least substantially identical construction of the cable management units, the following description may also be read on possible other cable management units.

The cable management unit 10 is in the present case embodied as a 19-inch insert. The cable management unit 10 is intended to be used in a carrier unit 60, in the present case in particular in a rack. Herein, the cable management unit 10 is installed horizontally. Furthermore, the cable management unit 10 has a height of three height units (U) i.e. 133.35 mm. Principally, however, it is also conceivable to implement a carrier unit as any other type of carrier unit. Moreover, a cable management unit could have a height of 44,45 mm (1 U), 88,90 mm (2 U), 117,8 mm (4 U) and/or any other height.

Moreover, the cable management unit 10 comprises a fiber connection density of more than 96 connections per height unit. In the present case the cable management unit 10 is configured to support at least 128 fiber connections per height unit and/or at least 384 fiber connections.

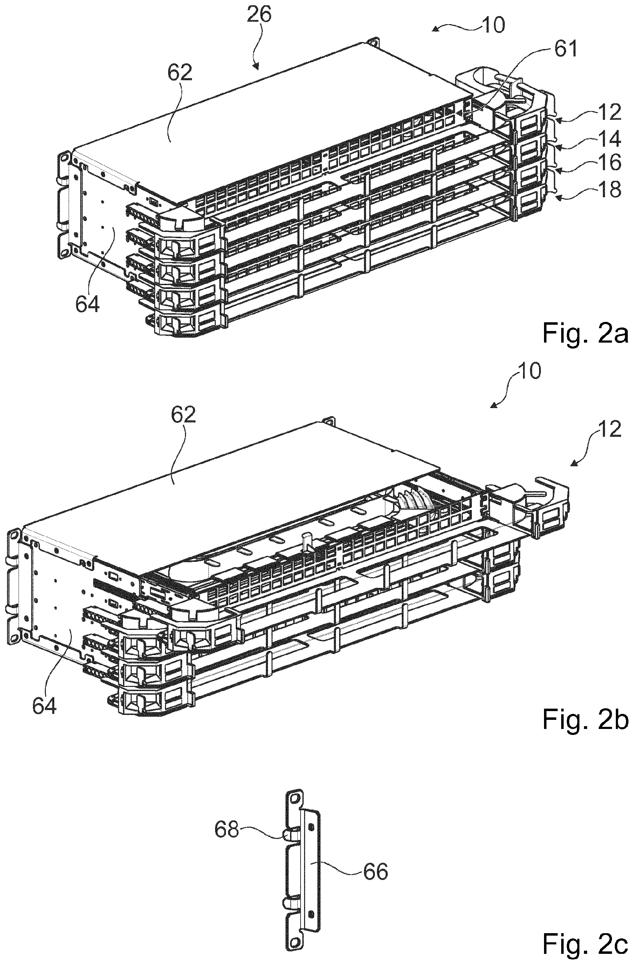

In particular for the purpose of achieving this, the cable management unit 10 comprises a frame unit 26 (cf. figures 2a to 3c). The frame unit 26 is embodied as a chassis. The frame unit 26 forms an outer housing of the cable management unit 10. Moreover, the frame unit 26 is in the present case made of metal, in particular metal sheets. The frame unit 26 defines and/or delimits a receiving region 61. Alternatively, a frame unit may be made at least partly of a plastic material.

The frame unit 26 comprises two cover plates 62. The cover plates 62 are embodied at least substantially identical to each other. The cover plates 62 are respectively embodied at least substantially rectangular, in particular if viewed perpendicularly to a main extension plane of the cover plates 62. One cover plate 62 of the cover plates 62 forms and/or defines a lower side of the frame unit 26 and in particular of the cable management unit 10. A further cover plate 62 of the cover plates 62 forms and/or defines an upper side of the frame unit 26 and in particular of the cable management unit 10. The cover plates 62 thus delimit the height of the frame unit 26 and in particular of the cable management unit 10.

The frame unit 26 further comprises two side walls 64. The side walls 64 are embodied as lateral side walls. The side walls 64 are embodied at least substantially identical to each other. The side walls 64 are embodied at least substantially rectangular, in particular if viewed perpendicularly to a main extension plane of the side walls 64. The side walls 64 delimit a width of the frame unit 26 and in particular of the cable management unit 10.

The cover plates 62 and the side walls 64 can be coupled to each other by way of any fastening method. In the present case, the cover plates 62 and the side walls 64 are at least partially connected to each other by means of screw connections. However, it is also suitable to use other fastening methods and/or to embody a frame unit in a one-part implementation.

Moreover, the frame unit 26 has a modular structure, which means that the cover plates 62 and/or the side walls 64 are selectable from a group of cover plates 62 and/or side walls 64, depending on a width and/or a height of the frame unit 26. In the present case, a width and a height of the frame unit 26 are at least substantially selectable according to any requirements. Accordingly, the cable management unit 10 has in the present case a modular structure and can, in particular, be varied at least as regards its width and/or its height.

In particular for the purpose of ensuring an especially secure fastening of the frame unit 26 on the carrier unit 60, the cable management unit 10 comprises at least one fastening element 66 (cf. in particular figure 2c). In the present case, the cable management unit 10 comprises at least two fastening elements 66. The fastening elements 66 are embodied at least substantially identical to each other. The fastening elements 66 are in the present case made of metal. The fastening elements 66a are embodied at least substantially L-shaped.

A long side of the L-shape respectively forms and/or defines a holding region of the fastening elements 66. Furthermore, a short side of the L-shape respectively defines a carrier fastening section of the fastening elements 66. The carrier fastening sections can herein be fastened to the carrier unit 60 in a manner that is already known. The fastening elements 66 are in the mounted state arranged in a rear-side region of the cable management unit 10. In the mounted state, the fastening elements 66, in particular the long side of the L-shape, are fastened to the side walls 64 of the frame unit 26. The fastening elements 66 are provided to support the cable management unit 10 in the rear-side region and, in particular, to at least partially transfer a weight force of the cable management unit 10 onto the carrier unit 60.

In the present case, each fastening element 66 comprises at least one auxiliary fastening element 68, which is at least substantially lug-shaped and/or tongue-shaped and which is configured to simplify a fastening of the frame unit 26 and in particular of the cable management unit 10 to the carrier unit 60. As an alternative it is, however, also conceivable to dispense with auxiliary fastening elements.

Moreover, the fastening elements 66 are selectable from a group of fastening elements 66, depending on a type of the carrier unit 60 and/or on an implementation of the frame unit 26. In the present case, a width, a height and/or a type of the fastening elements 66 is at least substantially selectable according to respective requirements.

The cable management unit 10 further comprises at least one cable management module 12, 14, 16, 18 (cf. in particular figures 2a to 3c). In the present case, the cable management unit 10 comprises a plurality of cable management modules 12, 14, 16, 18, in particular four cable management modules 12, 14, 16, 18, wherein each cable management module 12, 14, 16, 18 is in particular located, in a mounted state, in the receiving region 61. Each of the cable management modules 12, 14, 16, 18 extends at least largely over an entire width of the cable management unit 10. In addition, each of the cable management modules 12, 14, 16, 18 has a height of 25 % of a height of the cable management unit 10. The cable management modules 12, 14, 16, 18 are located adjacent to each other and in particular one above the other. The cable management modules 12, 14, 16, 18 are at least substantially identical to each other. Moreover, the cable management modules 12, 14, 16, 18 are releasable from, connectable to and/or replaceable by each other individually. The cable management modules 12, 14, 16, 18 are configured for providing and/or supporting a connection functionality and/or a connection capability.

The cable management modules 12, 14, 16, 18 are embodied as drawer units. The cable management modules 12, 14, 16, 18 are movable in a linear motion with respect to the frame unit 26.

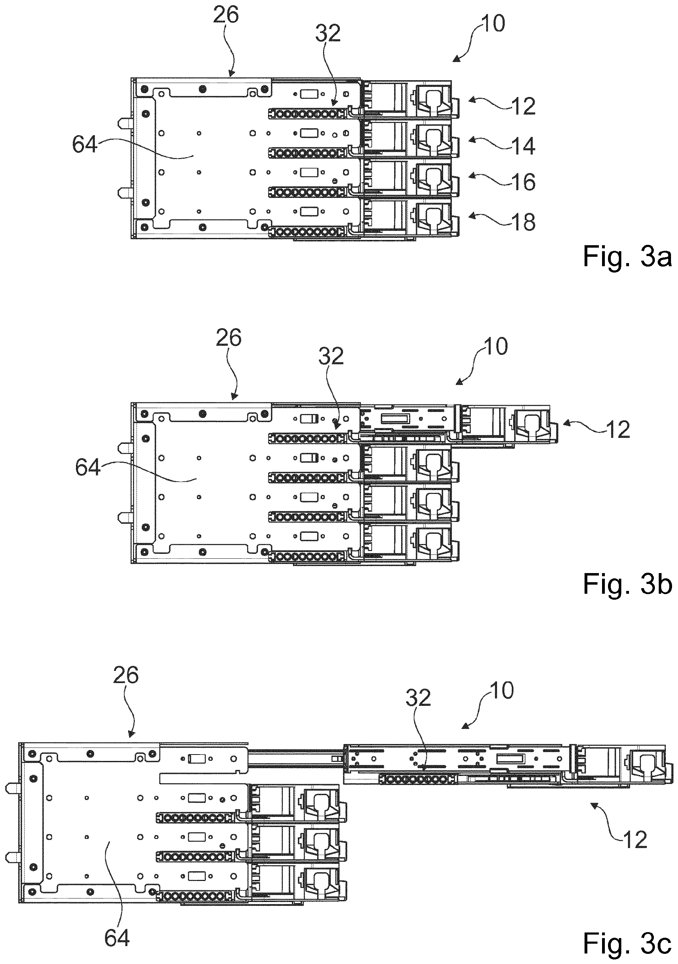

In the present case, each of the cable management modules 12, 14, 16, 18 is movable from the storage position (cf. in particular figure 3a) to at least two different processing positions, in particular a first processing position (cf. in particular figure 3b) and a second processing position (cf. in particular figure 3c), and vice versa. In a movement direction of the cable management modules 12, 14, 16, 18, the first processing position is located between the storage position and the second processing position. Moreover, the first processing position is a maintenance position and is configured to perform a maintenance operation while the second processing position is a splicing position and is configured to perform a splicing operation.

The following description will be restricted to one of the cable management modules 12, wherein, due to the at least substantially identical structures of the cable management modules 12, 14, 16, 18, the following description may also be read on possible other cable management units 14, 16, 18.

The cable management module 12 has a modular structure. The cable management module 12 comprises at least one cable inlay 20, 22, 24 selected from a group of at least three individually changeable cable inlays 20, 22, 24. The cable inlays 20, 22, 24 are herein at least substantially structurally identical to each other but at least partly differ from each other regarding their inner structure and their functionality. In the present case, the cable management module 12 is configured to support each of the at least three individually changeable cable inlays 20, 22, 24. For this purpose, the cable management module 12 defines a cable inlay receiving region 70 which is in particular configured for selectively receiving each of the at least three individually changeable cable inlays 20, 22, 24 at the same time, in particular one cable inlay 20, 22, 24 at a time.

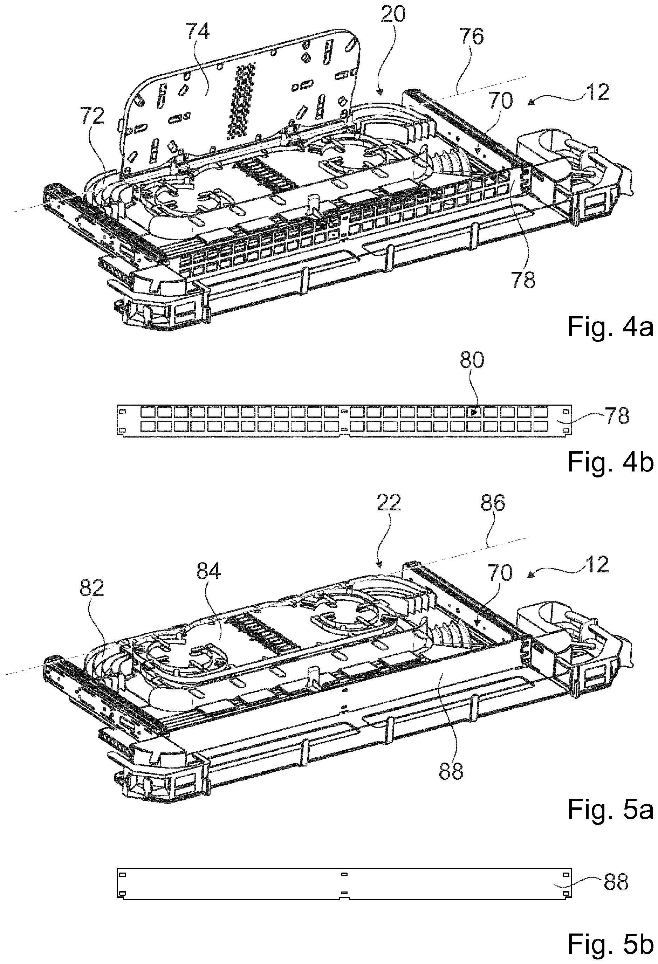

A first cable inlay 20 of the cable inlays 20, 22, 24 is shown in figures 4a and 4b. The first cable inlay 20 is implemented as a splice-patch inlay and is configured at least to support a splicing functionality and a patching functionality.

The first cable inlay 20 comprises a first receiving element 72. The first receiving element 72 is embodied as a base body. The first receiving element 72 extends at least largely over an entire width of the cable management module 12. The first receiving element 72 is in the present case made of plastic. The first receiving element 72 is, in at least one operational state, configured for guiding and/or distributing cables.

The first cable inlay 20 further comprises at least one first management element 74. In the present case, the first cable inlay 20 comprises a plurality of first management elements 74. Herein, the first cable inlay 20 supports up to three first management elements 74. The first management elements 74 are at least substantially identical to each other. The first management elements 74 are in the present case made of plastic. The first management elements 74 are movably connected to the first receiving element 72. Herein, each of the first management elements 74 is pivotable about a horizontally aligned first pivot axis 76. The first management elements 74 are at least configured to provide a splicing and/or patching functionality. Principally, it is however also conceivable that a first cable inlay comprises exactly one first management element or two first management elements.

In addition, the first cable inlay 20 comprises a first front cover 78. The first front cover 78 is arranged in a region of a front side of the first cable inlay 20. The first front cover 78 extends at least largely over an entire width of the cable management module 12. The first front cover 78 covers the first receiving element 72 and the first management elements 74 at least substantially. The first front cover 78 is adapted to the first receiving element 72 and the first management elements 74. The first front cover 78 is at least configured to provide a patching functionality. For this purpose, the first front cover 78 comprises a plurality of first recesses 80. In the present case, the first front cover 78 comprises 48 first recesses 80.

A second cable inlay 22 of the cable inlays 20, 22, 24 is shown in figures 5a and 5b. The second cable inlay 22 is implemented as a splice-splice inlay and is configured at least to support a splicing functionality.

The second cable inlay 22 comprises a second receiving element 82. The second receiving element 82 is at least substantially identical to the first receiving element 72. The second receiving element 82 is embodied as a base body. The second receiving element 82 extends at least largely over an entire width of the cable management module 12. The second receiving element 82 is in the present case made of plastic. The second receiving element 82 is, in at least one operational state, configured for guiding and/or distributing cables.

The second cable inlay 22 further comprises at least one second management element 84. In the present case, the second cable inlay 22 comprises a plurality of second management elements 84. Herein, the second cable inlay 22 supports up to three second management elements 84. The second management elements 84 are at least substantially identical to each other. In addition, the second management elements 84 are at least substantially identical to the first management elements 74. The second management elements 84 are in the present case made of plastic. The second management elements 84 are movably connected to the second receiving element 82. Herein, each of the second management elements 84 is pivotable about a horizontally aligned second pivot axis 86. The second management elements 84 are at least configured to provide a splicing functionality. Principally, it is however also conceivable that a second cable inlay comprises exactly one second management element or two second management elements.

In addition, the second cable inlay 22 comprises a second front cover 88. The second front cover 88 is arranged in a region of a front side of the second cable inlay 22. The second front cover 88 extends at least largely over an entire width of the cable management module 12. The second front cover 88 covers the second receiving element 82 and the second management elements 84 at least substantially. The second front cover 88 is adapted to the second receiving element 82 and the second management elements 84. The second front cover 88 is at least configured to provide a covering functionality. The second front cover 88 is free from recesses.

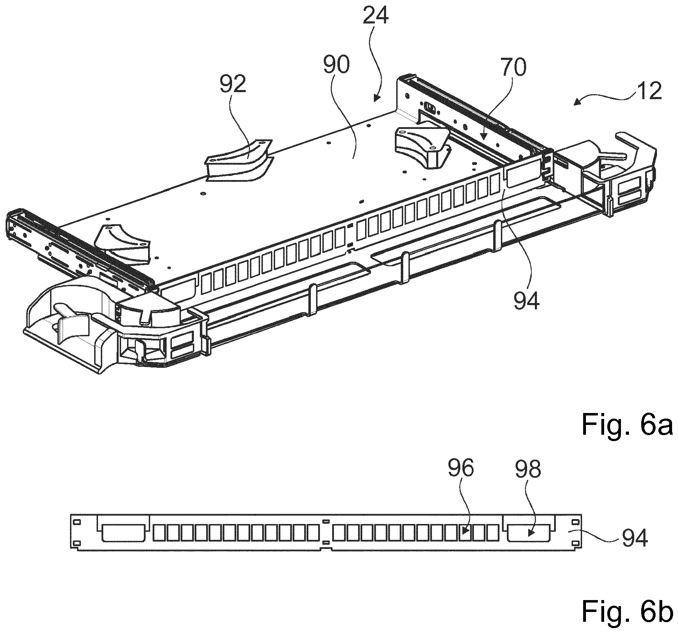

A third cable inlay 24 of the cable inlays 20, 22, 24 is shown in figures 6a and 6b. The third cable inlay 22 is implemented as a patch-patch inlay and is configured at least to support a patching functionality.

The third cable inlay 24 comprises a third receiving element 90. The third receiving element 90 is embodied as a base body. The third receiving element 90 extends at least largely over an entire width of the cable management module 12. The third receiving element 90 is in the present case made of plastic. The third receiving element 90 is, in at least one operational state, configured for guiding and/or distributing cables.

For this purpose, the third cable inlay 24 comprises at least one third management element 92. In the present case, the third cable inlay 24 comprises a plurality of third management elements 92. Herein, the third cable inlay 24 supports up to three third management elements 92. The third management elements 92 are at least substantially identical to each other. The third management elements 92 are in the present case made of plastic. The third management elements 92 are immovably connected to the third receiving element 90. The third management elements 92 are at least configured to provide a routing functionality and/or a patching functionality. Principally, it is however also conceivable that a third cable inlay comprises exactly one third management element, two third cable management elements or four third management elements.

In addition, the third cable inlay 24 comprises a third front cover 94. The third front cover 94 is arranged in a region of a front side of the third cable inlay 24. The third front cover 94 extends at least largely over an entire width of the cable management module 12. The third front cover 94 covers the third receiving element 90 and the third management elements 92 at least substantially. The third front cover 94 is adapted to the third receiving element 90 and the third management elements 92. The third front cover 94 is at least configured to provide a patching functionality. For this purpose, the third front cover 94 comprises a plurality of third recesses 96, 98. In the present case, the third front cover 94 comprises at least two third recesses 96, 98, which are embodied differently and which differ in particular in size. Herein, the third front cover 94 comprises 24 third recesses 96 and two further third recesses 98.

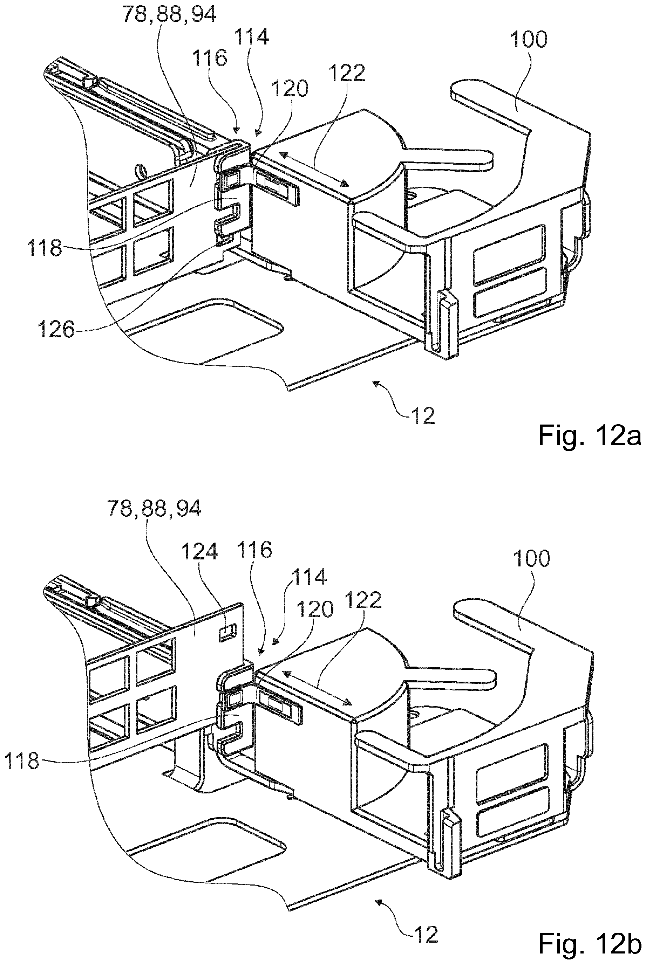

The cable management module 12 comprises a front cover holding unit 114 for holding and locking the front covers 78, 88, 94 in place (cf. figures 12a and 12b). Figure 12a shows the front cover locking unit 114 in a first locked position of one of the front covers 78, 88, 94. In the first locked position the front cover 78, 88, 94 is in a lowered position. The lowered positon in particular corresponds to a standard position. Figure 12b shows the front cover locking unit 114 in a second locked position of one of the front covers 78, 88, 94. In the second locked position the front cover 78, 88, 94 is in a raised position. The raised positon in particular corresponds to a working position and preferably provides a technician with improved access to the cable management module 12.

The front cover holding unit 114 is connected to the cable manager element 100. The front cover holding unit 114 comprises a guiding unit 116 for holding and vertically guiding the front cover 78, 88, 94. The guiding unit 116 comprises a guiding rail 118 which encompasses an end region of the front cover 78, 88, 94 from three sides. The front cover holding unit 114 comprises a latching element 120 which is movable along a direction 122. The direction 122 is oriented perpendicularly to a main extension plane of the front cover 78, 88, 94. The latching element 120 comprises a pin (not shown) for engagement with notches 124, 126, wherein each of the locked positions of the front cover 78, 88, 94 is associated with one of the notches 124, 126. In the first locked position of the front cover 78, 88, 94 the pin engages into the notch 124. In the second locked position of the front cover 78, 88, 94 the pin engages into the notch 126. The latching element 120 may be forward biased toward the front cover 78, 88, 94 via an appropriate biasing element, for example a spring (not shown).

The cable management unit 10 moreover comprises at least one cable entry 32, which is configured for introducing cables into an interior of the cable management unit 10. In the present case, the cable management unit 10 comprises a plurality of cable entries 32, in particular four cable entries 32, wherein each cable entry 32 is associated to exactly one cable management module 12, 14, 16, 18. The cable entries 32 are at least substantially identical to each other. The cable entries 32 are located at one of the side walls 64 of the frame unit 26. The cable entries 32 are spaced apart from each other. The cable entries 32 are distributed over the height of the cable management unit 10. Moreover, each cable entry 32 is stationary with respect to the frame unit 26 in at least one operational state, in which the associated cable management module 12, 14, 16, 18 is moved. As can be best seen in figures 3a to 3c, in the present case each cable entry 32 is stationary, in particular with respect to the frame unit 26, during a movement of the associated cable management module 12, 14, 16, 18 into the first processing position and moves, in particular in a direction which is parallel to a movement direction of the associated cable management module 12, 14, 16, 18, during a movement of the associated cable management module 12, 14, 16, 18 into the second processing position. Herein, each of the cable entries 32 is individually movable with respect to the other cable entries 32.

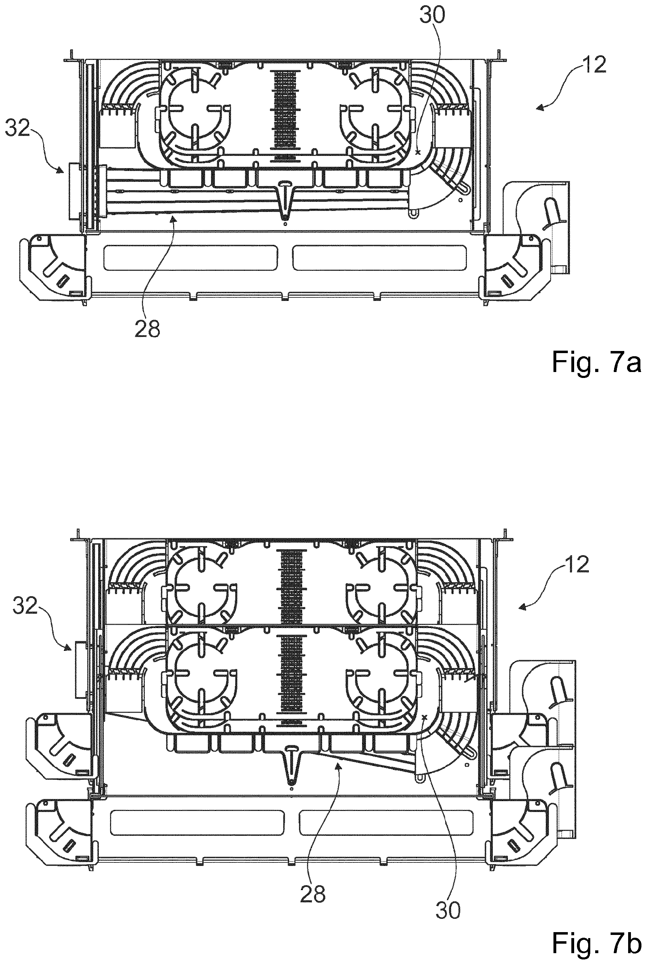

In particular for the purpose of preventing stresses on cables conveyed to the cable management modules 12, 14, 16, 18 and/or from the cable management modules 12, 14, 16, 18 during a movement of the cable management modules 12, 14, 16, 18, the cable management unit 10 further comprises at least one movement compensation channel 28 (cf. in particular figures 7a and 7b). In the present case, the cable management unit 10 comprises a plurality of movement compensation channels 28, in particular four movement compensation channels 28, wherein each movement compensation channel 28 is associated to exactly one cable entry 32 and/or to exactly one cable management module 12, 14, 16, 18. The movement compensation channels 28 are at least substantially identical to each other.

The following description will be restricted to one of the movement compensation channels 28, which is in particular associated to the cable management module 12, wherein, due to the at least substantially identical construction of the movement compensation channels 28, the following description may also be read on possible other movement compensation channels 28.

The movement compensation channel 28 is embodied at least substantially channel-shaped. Moreover, the movement compensation channel 28 is open in a direction parallel to the height of the cable management unit 10, in particular for introducing cables. The movement compensation channel 28 is completely located within the frame unit 26 and in particular within the cable management module 12. In addition, the movement compensation channel 28 is, herein, located at least largely below the cable inlay receiving region 70 of the cable management module 12. The movement compensation channel 28 extends over an entire width of the cable management module 12.

The movement compensation channel 28 is configured for conveying cables to the cable management module 12 and/or from the cable management module 12. Herein, the movement compensation channel 28 defines and/or determines a course and/or a pathway of the cables. For this purpose, the movement compensation channel 28 is directly connected to the cable management module 12. In addition, the movement compensation channel 28 is directly connected to the cable entry 32, which is in particular associated to the cable management module 12. Thus, the movement compensation channel 28 connects the cable entry 32 to the cable management module 12.

Furthermore, the movement compensation channel 28 is configured to prevent stresses on the cables during a movement of the cable management module 12, in particular from the storage position into the first processing position and vice versa. Herein, movement compensation channel 28 is configured to maintain a length of the cables, in particular at least within the cable management module 12, and to maintain maximum bending radiuses of the cables.

For this purpose, the movement compensation channel 28 is movably mounted within the frame unit 26 and in particular within the cable management module 12. In the present case, the movement compensation channel 28 is at least partly movable to the cable management module 12. Moreover, the movement compensation channel 28 is at least partly movable with respect to the cable entry 32. The movement compensation channel 28 is at least partly movable non-uniformly with respect to the cable management module 12 and in particular in a movement direction which at least partly differs from a movement direction of the cable management module 12. In the present case, the movement compensation channel 28 is pivotable about at least one vertically aligned third pivot axis 30. In the present case, the movement compensation channel 28 pivots about the third pivot axis 30 during a movement of the cable management module 12 from the storage position to the first processing position and vice versa, in particular in such a way that stresses on the cables are prevented. In addition, the movement compensation channel 28 is stationary with respect to the cable management module 12 during a movement of the cable management module 12 from the first processing position into the second processing position.

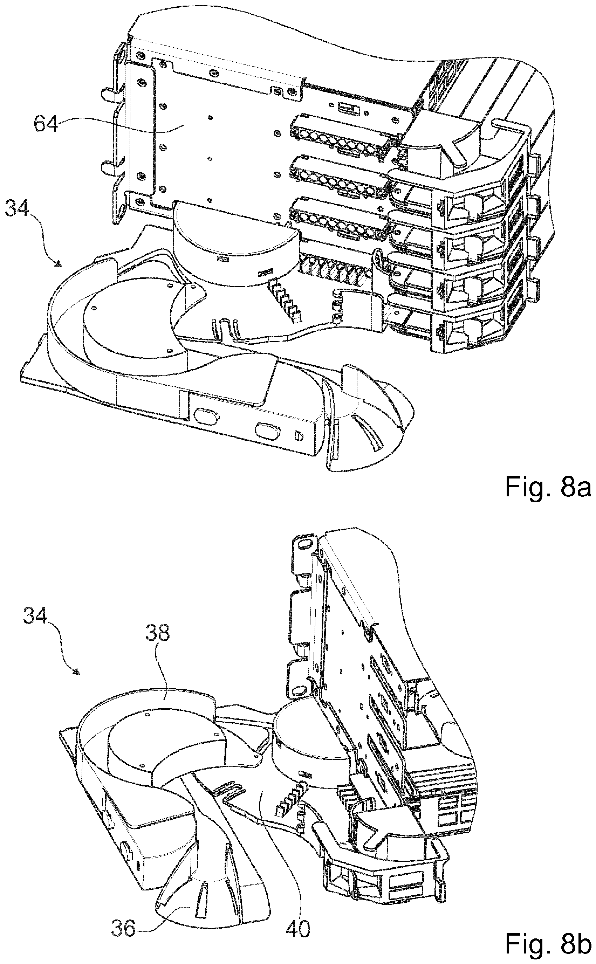

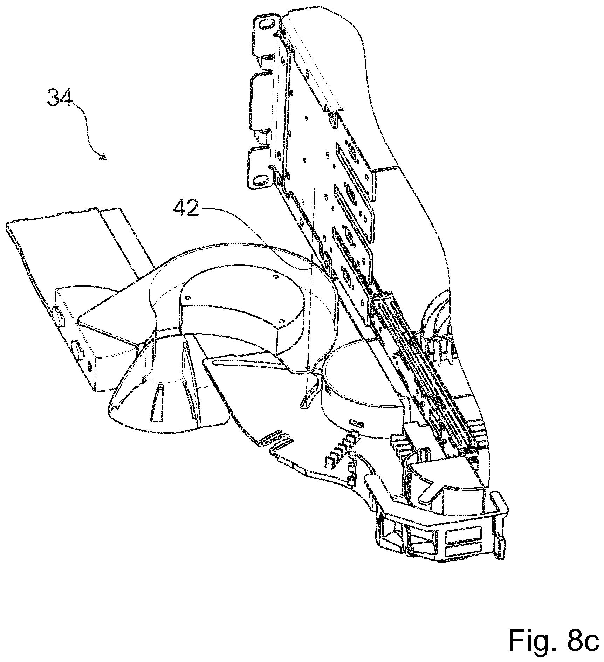

For the purpose of further preventing stresses on cables conveyed to the cable management modules 12, 14, 16, 18 and/or from the cable management modules 12, 14, 16, 18 during a movement of the cable management modules 12, 14, 16, 18, the cable management unit 10 comprises at least one cable routing manager 34 (cf. figures 8a to 8c). In the present case, the cable management unit 10 may selectively comprise a plurality of cable routing managers 34, in particular four cable routing managers 34, wherein each cable routing manager 34 is associated to exactly one cable entry 32. The cable routing managers 34 are at least substantially identical to each other.

The following description will be restricted to one of the cable routing managers 34, wherein, due to the at least substantially identical construction of the cable routing managers, the following description may also be read on possible other cable routing managers.

The cable routing manager 34 is located outside the cable management modules 12, 14, 16, 18 and outside the frame unit 26. The cable routing manager 34 is arranged in a region of the cable entry 32 and in particular in a region of the side wall 64 of the frame unit 26. The cable routing manager 34 is embodied separately from the cable entry 32 and the frame unit 26. The cable routing manager 34 is connected to the cable entry 32. Moreover, the cable routing manager 34 is open in a direction parallel to the height of the cable management unit 10, in particular for introducing cables.

The cable routing manager 34 is configured in at least one operational state to feed cables to the cable entry 32. Moreover, the cable routing manager 34 is configured to prevent stresses on the cables during a movement of the cable management module 12, which is in particular associated to the cable entry 32, in particular from the storage position and/or the first processing position to the second processing position and vice versa. Herein, the cable routing manager 34 is configured to maintain a length of the cables, in particular at least outside the cable management module 12, and to maintain maximum bending radiuses of the cables.

For this purpose, the cable routing manager 34 comprises at least one cable routing manager element 36, 38, 40. In the present case, the cable routing manager 34 comprises three cable routing manager elements 36, 38, 40. The cable routing manager elements 36, 38, 40 are movably connected to each other. In the present case, the cable routing manager elements 36, 38, 40 are pivotable with respect to each other about at least one vertically aligned fourth pivot axis 42. In the present case, the cable routing manager elements 36, 38, 40 pivot about the fourth pivot axis 42 during a movement of the cable management module 12 from the storage position and/or the first processing position to the second processing position and vice versa, in particular in such a way that stresses on the cables are prevented (cf. in particular figures 8b to 8d).

A first cable routing manager element 36 of the cable routing manager elements 36, 38, 40 is embodied as an entrance element. The first cable routing manager element 36 is embodied as a trough. The first cable routing manager element 36 is at least substantially C-shaped. The first cable routing manager element 36 is configured to feed cables into the cable routing manager 34.

A second cable routing manager element 38 of the cable routing manager elements 36, 38, 40 is embodied as a connection element. The second cable routing manager element 38 is embodied as a trough. The second cable routing manager element 38 is at least substantially C-shaped. The second cable routing manager element 38 is movably connected to the first cable routing manager element 36. The second cable routing manager element 38 is configured for routing the cables within the cable routing manager 34.

A third cable routing manager element 40 of the cable routing manager elements 36, 38, 40 is embodied as an exit element. The third cable routing manager element 40 is embodied as a trough. The third cable routing manager element 40 is at least substantially C-shaped. The third cable routing manager element 40 is movably connected to the second cable routing manager element 38. The third cable routing manager element 40 is immovably connected to the cable entry 32. The third cable routing manager element 40 is configured to convey cables out of the cable routing manager 34 and in particular into the cable entry 32.

Figures 8a to 8c show an embodiment of the cable routing manager 34 as a cable entry manager for conveying cables to the cable management modules 12, 14, 16, 18. However, a cable routing manager could also be embodied as a cable exit manager for conveying cables, in particular patch cables, away from the cable management modules 12, 14, 16, 18. Such a cable exit manager is mirror-symmetrical with respect to a vertical plane to the cable entry manager as shown in figures 8a to 8c. The cable exit manager is applicable to the further side wall 64 of the frame unit 26 which is situated opposite to the side wall 64.

Moreover, for handling such a high number of fiber connections as is provided in particular by the cable management unit 10, an efficient cable management is required in particular for feeding cables in and/or out.

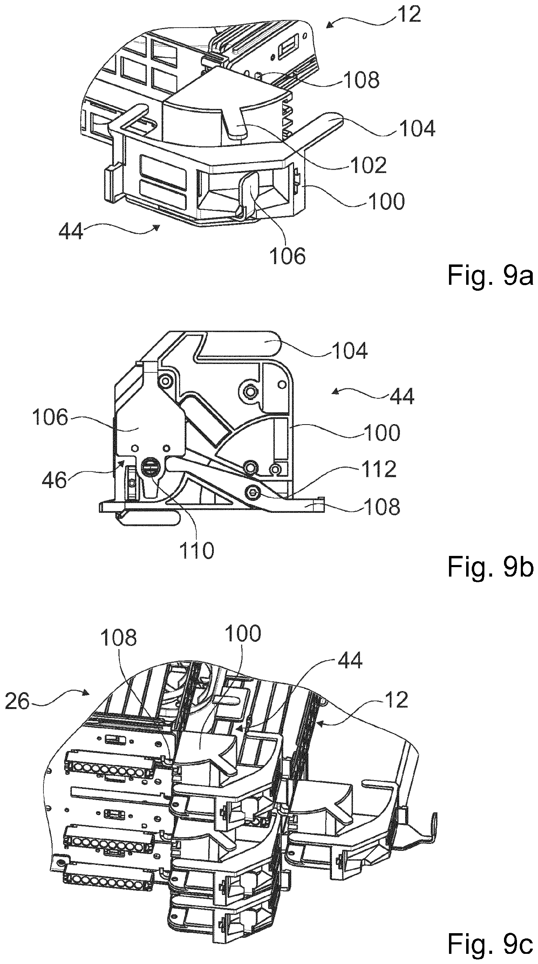

On account of this, the cable management unit 10 comprises at least one front-side cable manager 44 (cf. in particular figures 9a to 10b). In the present case, the cable management unit 10 comprises a plurality of front-side cable managers 44, in particular eight front-side cable managers 44, wherein respectively two front-side cable managers 44 of the eight front-side cable managers 44 are associated to exactly each of the cable management modules 12, 14, 16 ,18. The front-side cable managers 44 are at least substantially identical to each other. The front-side cable managers 44 are configured in at least one operational state to feed at least one cable to a front side of the cable management modules 12, 14, 16, 18.

The following description will be restricted to one of the front-side cable managers 44, which is in particular associated to the cable management module 12, wherein, due to the at least substantially identical construction of the front-side cable managers, the following description may also be read on possible other front-side cable managers.

The front-side cable manager 44 is arranged in a front-side region of the cable management unit 10. The front-side cable manager 44 is provided to guide a plurality of cables and to convey them in at least one operating state to the associated cable management module 12, 14, 16, 18.

For this purpose the front-side cable manager 44 comprises at least one cable manager element 100 (cf. in particular figures 9a to 9c). The cable manager element 100 is embodied as a trough. The cable manager element 100 is embodied in one piece, in particular in a one-part implementation. The cable manager element 100 is connected to the cable management module 12, in particular in such a way that the cable manager element 100 is immovable with respect to the cable management module 12.

The cable manager element 100 is, when viewed perpendicularly to a main extension plane of the cable management unit 10, embodied at least substantially in the shape of an annulus sector. In the present case a central angle is, in particular, between 20° and 60°. The cable manager element 100 comprises moreover a cable guiding region that has at least substantially the shape of an outer cylinder. The cable guiding region is provided to maintain a minimum bending radius of in the present case in particular 30 mm.

Furthermore, the cable manager element 100 comprises at least one holding element 102, 104. In the present case, the cable manager element 100 comprises two holding elements 102, 104. The holding elements 102, 104 are embodied as holding fingers. The holding elements 102, 104 at least partially close off the cable guiding region of the cable manager element 100 towards a top, in particular in a vertical direction.

Moreover, the front-side cable manager 44 comprises a locking unit 46. The locking unit 46 is integrated in the cable manager element 100. The locking unit 46 is configured to lock the cable management module 12 in the storage position in particular such that the cable management module 12 is immovable with respect to the frame unit 26. For this purpose, the locking unit 46 comprises an actuating element 106 and a locking element 108, which is in operative connection with the actuating element 106.

The actuating element 106 extends to the front-side region of the cable management unit 10. The actuating element 106 is movably connected to the cable manager element 100. In the present case, the actuating element 106 is pivotable about at least one vertically aligned fifth pivot axis 110. The actuating element 106 is configured to be pushed and/or touched by a user.

The locking element 108 extends to a rear-side region of the cable management unit 10. The locking element 108 is movably connected to the cable manager element 100. In the present case, the locking element 108 is pivotable about at least one vertically aligned sixth pivot axis 112. The sixth pivot axis 112 and the fifth pivot axis 110 are offset from each other in a horizontal direction. The locking element 108 can be actuated via the actuating element 106. The locking element 108 is in at least one operational state connected and/or secured to the frame unit 26 for locking the cable management module 12.

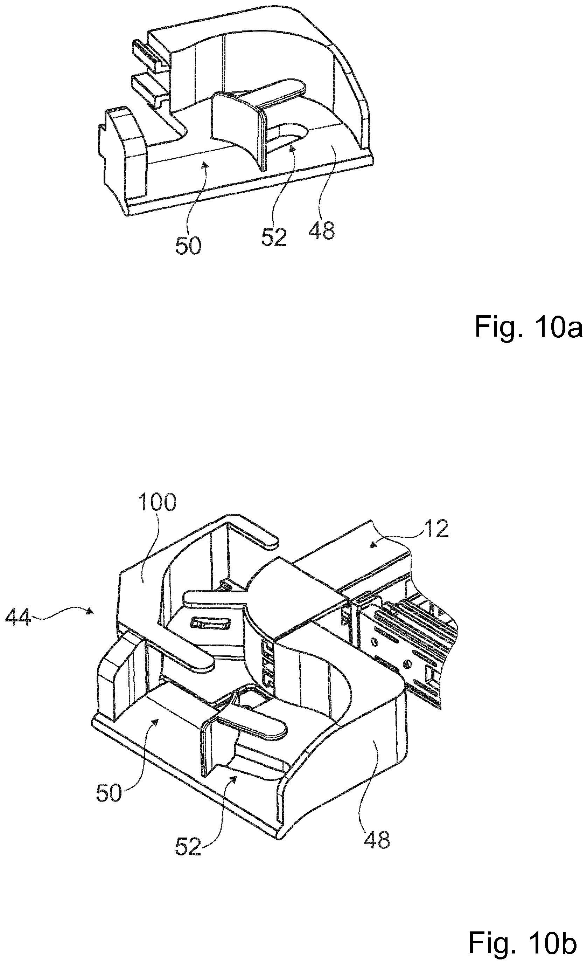

Furthermore, the front-side cable manager 44 may comprise, in particular selectively and depending on user requirements, a cable divider element 48 (cf. in particular figures 10a and 10b). The cable divider element 48 is embodied as a trough. The cable divider element 48 is embodied in one piece, in particular in a one-part implementation. The cable divider element 48 is embodied separately from the cable manager element 100. The cable divider element 48 is couplable to the cable manager element 100, in particular in such a way that the cable divider element 48 is immovable with respect to the cable manager element 100. The cable divider element 48 defines and/or provides two cable guiding channels 50, 52. The cable guiding channels 50, 52 are at least partly separate from each other. The cable guiding channels 50, 52 are configured for selectively guiding cables. In the present case, each of the cable guiding channels 50, 52 is configured to guide a plurality of cables. Thus, the cable divider element 48 is configured for dividing a plurality of cables into at least two at least partly separate groups of cables. Alternatively, it is however conceivable that a cable divider element may comprise at least three and/or at least four cable guiding channels. Moreover, it is conceivable to embody a cable manager element and/or a cable divider element in a multiple-part implementation.

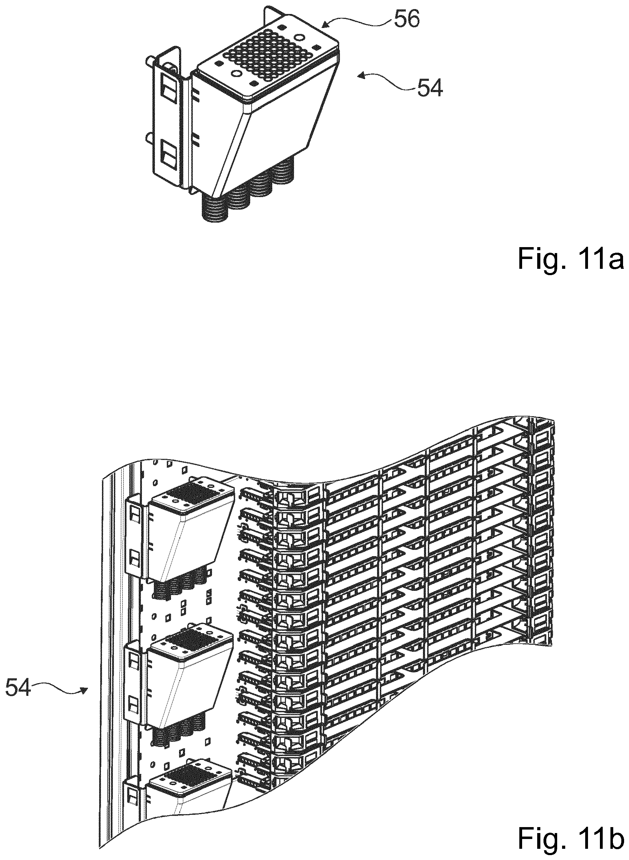

Furthermore, the cable management device comprises at least one fiber distribution unit 54 (cf. figure 1 and figures 11a and 11b). In the present case, the cable management device comprises a plurality of fiber distribution units 54, in particular seven fiber distribution units 54, wherein for the sake of clarity in figure 1 merely one of the fiber distribution units 54 has a reference numeral. The fiber distribution units 54 are intended to be used in the carrier unit 60. In a mounted state, the fiber distribution units 54 are located adjacent to each other and in particular one above the other. The fiber distribution units 54 are at least substantially identical to each other. Moreover, the fiber distribution units 54 are releasable from, connectable to and/or replaceable by each other individually.

The fiber distribution units 54 are embodied separately from the cable management units 10. In a mounted state, the fiber distribution units 54 and the cable management units 10 are spaced apart from each other. Herein, each of the fiber distribution units 54 is associated to at least one of the cable management units 10. In the present case, each of the fiber distribution units 54 is associated to two of the cable management units 10. The fiber distribution units 54 are configured for guiding and/or distributing cables. The fiber distribution units 54 are configured for feeding cables to the cable management units 10.

For this purpose each fiber distribution unit 54 provides at least 64 cable ducts 56, each of which is configured at least for guiding and/or fanning out at least one cable. The cable ducts 56 are separate from each other. The cable ducts 56 are aligned parallel to each other. Moreover, the cable ducts 56 are vertically oriented and extend in particular in a direction which is parallel to the height of the cable management units 10. Alternatively, it is however also conceivable to dispense with fiber distribution units.

## Claims

1. A cable management device, in particular for optical waveguide cables, comprising at least one carrier unit (60) and at least one cable management unit (10), which comprises at least one cable management module (12, 14, 16, 18) which has a modular structure and which is movable from a storage position to at least a first and a second processing position and vice versa, wherein the cable management unit (10) comprises at least one movable movement compensation channel (28), which is configured for conveying at least one cable to the cable management module (12, 14, 16, 18) and/or from the cable management module (12, 14, 16, 18) and which is configured to prevent stresses on the cable during a movement of the cable management module (12, 14, 16, 18), wherein the cable management unit (10) comprises at least one frame unit (26), which can be fastened to the carrier unit (60) and which is configured to at least partly delimit at least one receiving region for receiving the cable management module (12, 14, 16, 18), wherein the cable management unit (10) comprises at least one cable entry (32) associated to a cable management module (12, 14, 16, 18) which is configured for introducing the cable into an interior of the cable management unit (10) into the cable management module (12, 14, 16, 18), **characterized in that** the cable entry (32) is stationary, with respect to the frame unit (26), during a movement of the associated cable management module (12, 14, 16, 18) into the first processing position and moves, in a direction which is parallel to a movement direction of the associated cable management module (12, 14, 16, 18), during a movement of the associated cable management module (12, 14, 16, 18) into the second processing position.

2. The cable management device according to claim 1, **characterized in that** the cable management unit (10) comprises a fiber connection density of at least 96 fiber connections per height unit.

3. The cable management device according to claim 1 or 2, **characterized in that** the cable management unit (10) is embodied as a 482,6-mm (19-inch) insert, as an ETSI insert or as a 584,2-mm (23-inch) insert and is configured to support at least 124 fiber connections per height unit.

4. The cable management device according to any one of the preceding claims, **characterized in that** the cable management module (12, 14, 16, 18) is configured to support at least two individually changeable cable inlays (20, 22, 24), which are embodied at least partly different from each other.

5. The cable management device according to any one of the preceding claims, **characterized in that** the cable management unit (10) comprises at least one frame unit (26) for receiving at least one cable management module (12, 14, 16, 18), wherein each of the cable management modules (12, 14, 16, 18) received in the frame unit (26) is movable from a storage position to at least one processing position and vice versa.

6. The cable management device according to any one of the preceding claims, **characterized in that** the movement compensation channel (28) is located at least largely within the cable management module (12, 14, 16, 18).

7. The cable management device according to any one of the preceding claims, **characterized in that** the movement compensation channel (28) extends at least largely over an entire width of the cable management module (12, 14, 16, 18).

8. The cable management device according to any one of the preceding claims, **characterized in that** the movement compensation channel (28) is pivotable about at least one vertically aligned pivot axis (30).

9. The cable management device according to any one of the preceding claims, **characterized in that** the cable management unit (10) comprises at least one cable entry (32) which is configured for introducing the cable and which is stationary in at least one operational state, in which the cable management module (12, 14, 16, 18) is moved, wherein the cable entry (32) is connected to the cable management module (12, 14, 16, 18) via the movement compensation channel (28).

10. The cable management device according to claim 9 **characterized in that** the movement compensation channel (28) comprises at least one circumferentially closed channel for securely guiding the cable from the cable entry (32) to the cable management module (12, 14, 16, 18).

11. The cable management device according to any one of the preceding claims, **characterized in that** the cable management unit (10) comprises at least one cable routing manager (34), which is configured in at least one operational state to feed at least one cable to at least one cable entry (32) of the cable management unit (10) and which is configured to prevent stresses on the cable during a movement of the cable management module (12, 14, 16, 18).

12. The cable management device according to claim 11 **characterized in that** the cable routing manager (34) comprises a plurality of cable routing manager elements (36, 38, 40) which are movably connected to each other.

13. The cable management device according to claim 12 **characterized in that** the cable routing manager elements (36, 38, 40) are pivotable with respect to each other about at least one vertically aligned further pivot axis (42).

14. The cable management device according to any one of the preceding claims, **characterized in that** the cable management unit (10) comprises at least one front-side cable manager (44), which is attached to the cable management module (12, 14, 16, 18) and which is configured in at least one operational state to feed at least one cable to a front side of the cable management module (12, 14, 16, 18).

15. The cable management device according to claim 14, **characterized in that** the front-side cable manager (44) comprises a locking unit (46) which is configured to lock the cable management module (12, 14, 16, 18) at least in the storage position and/or the processing position.

16. The cable management device according to claim 14 or 15, **characterized in that** the front-side cable manager (44) comprises a cable divider element (48) defining at least two cable guiding channels (50, 52) which are at least partly separate from each other and which are configured for selectively guiding the cable.

17. A cable management system (58) comprising at least one cable management device according to one of the preceding claims.

## Patentansprüche

1. Kabelmanagementvorrichtung, insbesondere für Lichtwellenleiterkabel,
die mindestens eine Trägereinheit (60) und mindestens eine Kabelmanagementeinheit (10) umfasst, welche mindestens ein Kabelmanagementmodul (12, 14, 16, 18) aufweist, das eine modulare Struktur hat und das aus einer Verstaustellung in zumindest eine erste und eine zweite Bearbeitungsstellung und umgekehrt bewegbar ist,
wobei die Kabelmanagementeinheit (10) mindestens einen beweglichen Bewegungsausgleichskanal (28) aufweist, der dazu vorgesehen ist, mindestens ein Kabel zu dem Kabelmanagementmodul (12, 14, 16, 18) und/oder von dem Kabelmanagementmodul (12, 14, 16, 18) weg zu führen, und der dazu vorgesehen ist, während einer Bewegung des Kabelmanagementmoduls (12, 14, 16, 18) Spannungen am Kabel zu verhindern,
wobei die Kabelmanagementeinheit (10) mindestens eine Rahmeneinheit (26) aufweist, die an der Trägereinheit (60) befestigbar ist und die dazu vorgesehen ist, mindestens einen Aufnahmebereich zur Aufnahme des Kabelmanagementmoduls (12, 14, 16, 18) zumindest teilweise zu begrenzen, wobei die Kabelmanagementeinheit (10) mindestens einen einem Kabelmanagementmodul (12, 14, 16, 18) zugeordneten Kabeleingang (32) aufweist, welcher dazu vorgesehen ist, das Kabel in ein Inneres der Kabelmanagementeinheit (10) und in das Kabelmanagementmodul (12, 14, 16, 18) einzuführen,
**dadurch gekennzeichnet, dass**
der Kabeleingang (32) während einer Bewegung des zugehörigen Kabelmanagementmoduls (12, 14, 16, 18) in Bezug auf die Rahmeneinheit (26) stationär ist und sich während einer Bewegung des zugehörigen Kabelmanagementmoduls (12, 14, 16, 18) in einer zu einer Bewegungsrichtung des zugehörigen Kabelmanagementmoduls parallelen Richtung in die zweite Bearbeitungsstellung bewegt.

2. Kabelmanagementvorrichtung nach Anspruch 1,
**dadurch gekennzeichnet, dass** die Kabelmanagementeinheit (10) eine Faserverbindungsdichte von mindestens 96 Faserverbindungen pro Höheneinheit aufweist.

3. Kabelmanagementvorrichtung nach Anspruch 1 oder 2,
**dadurch gekennzeichnet, dass** die Kabelmanagementeinheit (10) als 482,6-mm (19-Zoll) -Einsatz, als ETSI-Einsatz oder als 584,2-mm (23-Zoll) -Einsatz ausgebildet und dazu vorgesehen ist, mindestens 124 Faserverbindungen pro Höheneinheit zu unterstützen.

4. Kabelmanagementvorrichtung nach einem der vorhergehenden Ansprüche, **dadurch gekennzeichnet, dass** das Kabelmanagementmodul (12, 14, 16, 18) dazu vorgesehen ist, mindestens zwei individuell austauschbare Kabelstränge (20, 22, 24) zu unterstützen, welche mindestens teilweise voneinander verschieden ausgebildet sind.

5. Kabelmanagementvorrichtung nach einem der vorhergehenden Ansprüche, **dadurch gekennzeichnet, dass** die Kabelmanagementeinheit (10) mindestens eine Rahmeneinheit (26) zur Aufnahme mindestens eines Kabelmanagementmoduls (12, 14, 16, 18) aufweist, wobei jedes von den in der Rahmeneinheit (26) aufgenommenen Kabelmanagementmodulen (12, 14, 16, 18) aus einer Verstaustellung in mindestens eine Bearbeitungsstellung und umgekehrt bewegbar ist.

6. Kabelmanagementvorrichtung nach einem der vorhergehenden Ansprüche, **dadurch gekennzeichnet, dass** der Bewegungsausgleichskanal (28) zumindest weitgehend innerhalb des Kabelmanagementmoduls (12, 14, 16, 18) angeordnet ist.

7. Kabelmanagementvorrichtung nach einem der vorhergehenden Ansprüche, **dadurch gekennzeichnet, dass** der Bewegungsausgleichskanal (28) sich zumindest weitgehend über eine gesamte Breite des Kabelmanagementmoduls (12, 14, 16, 18) erstreckt.

8. Kabelmanagementvorrichtung nach einem der vorhergehenden Ansprüche, **dadurch gekennzeichnet, dass** der Bewegungsausgleichskanal (28) um mindestens eine vertikal ausgerichtete Schwenkachse (30) schwenkbar ist.

9. Kabelmanagementvorrichtung nach einem der vorhergehenden Ansprüche, **dadurch gekennzeichnet, dass** die Kabelmanagementeinheit (10) mindestens einen Kabeleingang (32) aufweist, der zu einer Einführung des Kabels vorgesehen ist und der in mindestens einem Betriebszustand, in dem das Kabelmanagementmodul (12, 14, 16, 18) bewegt wird, stationär ist, wobei der Kabeleingang (32) über den Bewegungsausgleichskanal (28) mit dem Kabelmanagementmodul (12, 14, 16, 18) verbunden ist.

10. Kabelmanagementvorrichtung nach Anspruch 9,
**dadurch gekennzeichnet, dass** der Bewegungsausgleichskanal (28) mindestens einen rundum geschlossenen Kanal zur sicheren Führung des Kabels vom Kabeleingang (32) zum Kabelmanagementmodul (12, 14, 16, 18) aufweist.

11. Kabelmanagementvorrichtung nach einem der vorhergehenden Ansprüche, **dadurch gekennzeichnet, dass** die Kabelmanagementeinheit (10) mindestens einen Kabelleitwegmanager (34) aufweist, der dazu vorgesehen ist, in mindestens einem Betriebszustand mindestens einem Kabeleingang (32) mindestens ein Kabel der Kabelmanagementeinheit (10) zuzuführen, und der dazu vorgesehen ist, während einer Bewegung des Kabelmanagementmoduls (12, 14, 16, 18) Spannungen an dem Kabel zu verhindern.

12. Kabelmanagementvorrichtung nach Anspruch 11,
**dadurch gekennzeichnet, dass** der Kabelleitwegmanager (34) eine Vielzahl von Kabelleitwegmanagerelementen (36, 38, 40) aufweist, die beweglich miteinander verbunden sind.

13. Kabelmanagementvorrichtung nach Anspruch 12,
**dadurch gekennzeichnet, dass** die Kabelleitwegmanagerelemente (36, 38, 40) relativ zu einander um mindestens eine weitere vertikal ausgerichtete Schwenkachse (42) schwenkbar sind.

14. Kabelmanagementvorrichtung nach einem der vorhergehenden Ansprüche,
**dadurch gekennzeichnet, dass** die Kabelmanagementeinheit (10) mindestens einen vorderseitigen Kabelmanager (44) aufweist, der an dem Kabelmanagementmodul (12, 14, 16, 18) angebracht und dazu vorgesehen ist, in mindestens einem Betriebszustand einer Vorderseite des Kabelmanagementmoduls (12, 14, 16, 18) mindestens ein Kabel zuzuführen.

15. Kabelmanagementvorrichtung nach Anspruch 14,
**dadurch gekennzeichnet, dass** der vorderseitige Kabelmanager (44) eine Verriegelungseinheit (46) aufweist, zu einer Verriegelung des Kabelmanagementmoduls (12, 14, 16, 18) in mindestens einer Verstaustellung und/oder in der Bearbeitungsstellung vorgesehen ist.

16. Kabelmanagementvorrichtung nach Anspruch 14 oder 15,
**dadurch gekennzeichnet, dass** der vorderseitige Kabelmanager (44) ein Kabelaufteilungselement (48) aufweist, welches mindestens zwei Kabelführungskanäle (50, 52) definiert, die zumindest teilweise voneinander getrennt sind und die dazu vorgesehen sind, das Kabel selektiv zu führen.

17. Kabelmanagementsystem (58) mit einer Kabelmanagementvorrichtung nach einem der vorhergehenden Ansprüche.

## Revendications

1. Dispositif de gestion des câbles, en particulier pour des câbles de fibres optiques,
incluant au moins une unité porteuse (60) et au moins une unité de gestion des câbles (10) qui comprend au moins un module de gestion des câbles (12, 14, 16, 18) ayant une structure modulaire et étant mouvable d'une position de rangement à au moins une première et deuxième position de traitement et vice versa,
l'unité de gestion des câbles (10) comprenant au moins une voie mouvable à compensation de mouvement (28) qui est prévue pour convoyer au moins un câble au module de gestion de câbles (12, 14, 16, 18) et/ou du module de gestion des câbles (12, 14, 16, 18), et qui est prévue à empêcher des tensions sur le câble pendant un mouvement du module de gestion des câbles (12, 14, 16, 18),
l'unité de gestion des câbles (10) comprenant au moins une unité cadre (26) qui peut être fixée à l'unité porteuse (60) et qui est prévue pour au moins partiellement délimiter au moins une région de logement pour recevoir le module de gestion des câbles (12, 14, 16, 18),
'unité de gestion des câbles (10) comprenant au moins une entrée de câble (32) associée à un module de gestion des câbles (12, 14, 16,18), qui est prévue pour introduire le câble dans un intérieur de l'unité de gestion des câbles (10) dans le module de gestion des câbles (12, 14, 16, 18),
**caractérisé en ce que**
l'entrée de câble (32) est stationnaire par rapport à l'unité cadre (26) pendant un mouvement du module de gestion des câbles associé (12, 14, 16, 18) dans la première position de traitement, l'entrée de câble (32) mouvant, dans une direction qui est parallèle à une direction de mouvement du module de gestion des câbles associé (12, 14, 16, 18) pendant un mouvement du module de gestion des câbles (12, 14, 16, 18) associé, dans la deuxième position de traitement.

2. Dispositif de gestion des câbles selon la revendication 1,
**caractérisé en ce que** l'unité de gestion des câbles (10) présente une densité de connexions de fibres d'au moins 96 connexions des fibres par unité de hauteur.

3. Dispositif de gestion des câbles selon la revendication 1 ou 2,
**caractérisé en ce que** l'unité de gestion des câbles (10) est réalisée comme insertion 482,6 mm (19 pouces), comme insertion ETSI ou comme insertion 584,2 mm (23 pouces) et est prévue pour un support d'au moins 124 connexions des fibres par unité de hauteur.

4. Dispositif de gestion des câbles selon l'une des revendications précédentes, **caractérisé en ce que** le module de gestion des câbles (12, 14, 16, 18) est prévu pour un support d'au moins deux torons de câble (20, 22, 24) qui sont changeables individuellement et qui sont réalisés au moins partiellement différent l'un de l'autre.

5. Dispositif de gestion des câbles selon l'une des revendications précédentes, **caractérisé en ce que** l'unité de gestion des câbles (10) comprend au moins une unité cadre (26) pour recevoir au moins un module de gestion des câbles (12, 14, 16, 18), où chacun des modules de gestion de câbles (12, 14, 16, 18) logés dans l'unité cadre (26) est mouvable d'une position de rangement dans au moins une position de traitement et vice versa.

6. Dispositif de gestion des câbles selon l'une des revendications précédentes, **caractérisé en ce que** la voie à compensation de mouvement (28) est localisée au moins largement dans le module de gestion des câbles (12, 14, 16, 18).

7. Dispositif de gestion des câbles selon l'une des revendications précédentes, **caractérisé en ce que** la voie à compensation de mouvement (28) s'étend au moins largement à travers une largeur complète du module de gestion des câbles (12, 14, 16, 18).

8. Dispositif de gestion des câbles selon l'une des revendications précédentes, **caractérisé en ce que** la voie à compensation de mouvement (28) est pivotable autour d'au moins un axe de pivotement (30) qui est orienté verticalement.

9. Dispositif de gestion des câbles selon l'une des revendications précédentes, **caractérisé en ce que** l'unité de gestion des câbles (10) comprend au moins une entrée de câble (32) qui est prévue pour introduire le câble, et qui est stationnaire dans au moins un état opératif dans lequel le module de gestion des câbles (12, 14, 16, 18) est mû, l'entrée de câble (32) étant liée au module de gestion des câbles (12, 14, 16, 18) par la voie à compensation de mouvement (28).

10. Dispositif de gestion des câbles selon la revendication 9,
**caractérisé en ce que** la voie à compensation de mouvement (28) comprend au moins une voie circonférentiellement fermée pour le guidage sûr du câble de l'entrée de câble (32) au module de gestion des câbles (12, 14, 16, 18).

11. Dispositif de gestion des câbles selon l'une des revendications précédentes, **caractérisé en ce que** l'unité de gestion de câbles (10) comprend au moins un gestionnaire d'acheminement des câbles (34) qui est prévu dans au moins un état opératif pour alimenter au moins un câble à au moins une entrée de câble (32) de l'unité de gestion des câbles (10) et qui est prévu pour un empêchement de tensions sur le câble pendant un mouvement du module de gestion des câbles (12, 14, 16, 18).

12. Dispositif de gestion des câbles selon la revendication 11,
**caractérisé en ce que** le gestionnaire d'acheminement des câbles (34) comprend une pluralité des éléments de gestionnaire d'acheminement des câbles (36, 38, 40) qui sont liés les uns aux autres en façon mouvable.

13. Dispositif de gestion des câbles selon la revendication 12,
**caractérisé en ce que** les éléments de gestionnaire d'acheminement des câbles (36, 38, 40) peuvent être pivotés l'un par rapport à l'autre autour d'au moins un axe de pivotement de plus (42) qui est orienté verticalement.

14. Dispositif de gestion des câbles selon l'une des revendications précédentes, **caractérisé en ce que** l'unité de gestion des câbles (10) comprend au moins un gestionnaire des câbles côté-avant (44) qui est attaché au module de gestion des câbles (12, 14, 16, 18) et est prévu dans au moins un état opératif pour alimenter au moins un câble à un côté avant du module de gestion des câbles (12, 14, 16, 18).

15. Dispositif de gestion des câbles selon la revendication 14,
**caractérisé en ce que** le gestionnaire des câbles côté-avant (44) comprend une unité de verrouillage (46) prévue pour verrouiller le module de gestion des câbles (12, 14, 16, 18) au moins dans la position de rangement et/ou la position de traitement.

16. Dispositif de gestion des câbles selon la revendication 14 ou 15,
**caractérisé en ce que** le gestionnaire des câbles côté-avant (44) comprend un élément séparateur des câbles (48) définissant au moins deux conduits de guidage des câbles (50, 52), qui sont au moins partiellement séparés l'un de l'autre et qui sont prévus pour un guidage sélectif du câble.

17. Système de gestion des câbles (58) comprenant au moins un dispositif de gestion des câbles selon l'une des revendications précédentes.
